# EUROPEAN PATENT APPLICATION

(11) **EP 0 997 810 A2**
(43) Date of publication of application: **03.05.2000**
(21) Application number: 99308365.8
(22) Date of filing: 22.10.1999
(51) Int. Cl.: G06F 1/16

(54) **Portable electronic device, power supply adapter unit therefor and recording medium**

(30) Priority: 26.10.1998 JP 30463798; 08.10.1999 JP 28801799
(71) Applicant: Sony Computer Entertainment Inc., Tokyo 107-0052 (JP)
(72) Inventor: Kutaragi, Ken, Minato-ku, Tokyo 107-0052 (JP); Shimakawa, Keiso, Minato-ku, Tokyo 107-0052 (JP); Ogata, Hiroki, Minato-ku, Tokyo 107-0052 (JP); Hino, Mariko, Minato-ku, Tokyo 107-0052 (JP)
(74) Representative: Horner, David Richard

(57) **Abstract**

A portable electric device is capable of displaying data in display orientations which are vertically different depending on an apparatus or unit to which the portable electric device is connected. The portable electric device has a program memory (41a) for storing a program, a microcomputer (41) for controlling the execution of the program, a display unit (130) for displaying information based on the program which is executed, a manual control pad (120) for controlling the program, and a connection detecting unit (41) for detecting a connection to a master unit, a power supply adapter unit (500), etc., and a display control unit (41) for setting the orientation of information displayed by the display unit (130) to an inverted display orientation (β) when a connection to the entertainment apparatus (1) is detected, and thereafter inverting the information displayed in the inverted orientation (β) and displaying the inverted information in a normal orientation (a) when a manual control input is entered via the manual control pad (120).

## Description

### BACKGROUND OF THE INVENTION

### Field of the Invention:

The present invention relates to a portable electronic device that can, for example, be used as an auxiliary memory device such as a memory card device for insertion into a video game apparatus, a power supply adapter unit for such a portable electronic device, and a recording medium which stores a program applicable to such a portable electronic device.

### Description of the Related Art:

Portable electronic devices or slave units such as conventional memory card devices for insertion into master units as information-handling apparatus such as video game apparatus comprise an interface for connection to the main assembly of the information-handling apparatus, i.e., the master unit, and a nonvolatile memory for storing data.

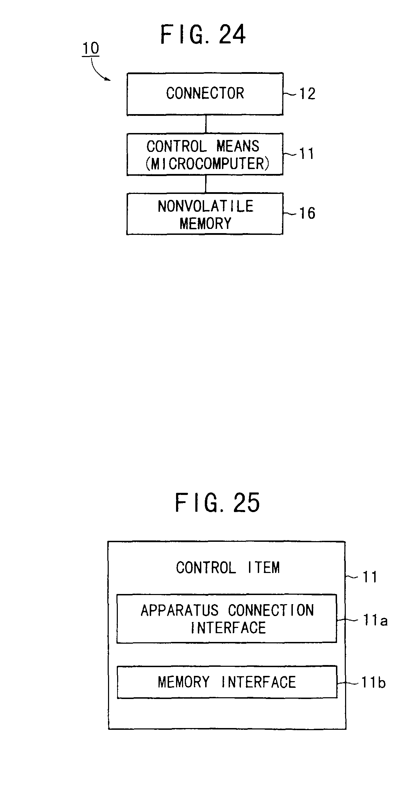

FIG. 24 of the accompanying drawings shows an arrangement of major components of a conventional portable electronic device. The conventional memory card device, generally denoted by 10, comprises a control means 11 for controlling operation of the memory card device, a connector 12 for connection to portable electronic devices disposed in a slot of the information-handling apparatus or the like, and a nonvolatile memory 16 for storing data. The connector 12 and the nonvolatile memory 16 are connected to the control means 11.

The control means 11 comprises a microcomputer, for example. The nonvolatile memory 16 comprises a flash memory or an EEPROM (Electrically Erasable Programmable ROM, for example. The interface for connection to the main assembly of the information-handling device may comprise a microcomputer as a control means for interpreting protocols.

FIG. 25 of the accompanying drawings shows control items carried out by the control means 11 of the conventional memory card device 10.

The conventional memory card device 10 has had only an apparatus connection interface lla for connection to the main assembly of the information-handling apparatus and a memory interface 11b for entering data into and retrieving data from the nonvolatile memory 16.

Conventional video game apparatus such as home TV game apparatus have a function to store game data in an auxiliary memory. The above memory card device 10 can also be used as an auxiliary memory for such video game apparatus.

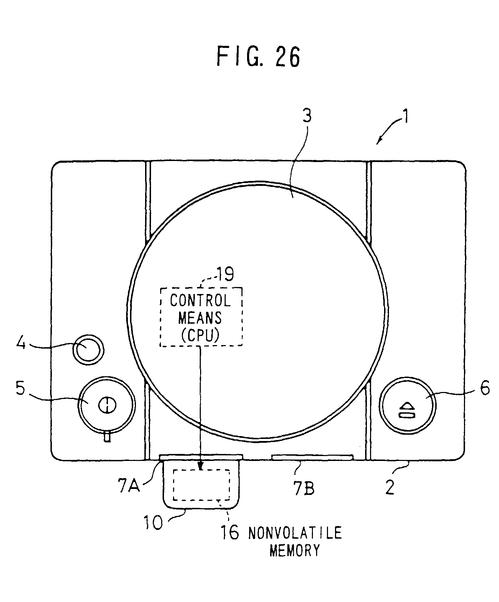

FIG. 26 of the accompanying drawings shows a conventional video game apparatus 1 which employs the memory card device 10 as an auxiliary memory. The conventional video game apparatus 1 has a substantially rectangular casing 2 which houses a disk loading unit 3 substantially centrally therein for loading an optical disk as a recording medium with a video game application program recorded therein. The casing 2 supports a reset switch 4 for resetting a video game, a power supply switch 5, a disk control switch 6 for controlling the loading of the optical disk, and two slots 7A, 7B.

The memory card device 10 for use as an auxiliary memory is inserted into one of the slots 7A, 7B, and result data of the game executed by the video game apparatus 1 are transmitted from a control means (CPU) 19 of the video game apparatus 1 and written in the nonvolatile memory 16. A plurality of manual controllers (not shown) may be connected respectively to the slots 7A, 7B to allow a plurality of users or game players to share the video game system to play a competition game, for example.

### SUMMARY OF THE INVENTION

It has been attempted to provide a slave unit that can be connected to a memory card slot in a video game apparatus as a master unit, with a function to execute a program such as a game program. Such a slave unit can also be used as a portable electronic device. If the slave unit can communicate easily with other devices, then the slave unit will find a wider range of applications, which will lead to the creation of new demands.

Aspects of the present invention are set out in the appended claims.

Embodiments of the present invention provide a portable electronic device that can be connected to a video game apparatus as a master unit, can be used singly as a slave unit, can easily communicate with other devices, and can display data depending on an apparatus to which the portable electronic device is connected.

Embodiments of the present invention also provide a power supply adapter unit for supplying electric energy to a portable electronic device.

Embodiments of the present invention further provide a recording medium which stores a program for displaying data on a portable electronic device.

A portable electronic device according to an embodiment of the present invention has a function to invert the orientation of information displayed by a display means. When a connection of the portable electronic device to another apparatus or unit such as a master unit is detected, the orientation of the displayed information is set to a predetermined orientation. The orientation of displayed data can be set to an orientation depending on an apparatus or unit to which the portable electronic device is connected.

A power supply adapter unit according to an embodiment of the present invention is capable of supplying electric energy to the portable electronic device. The portable electronic device, which has the function to invert the orientation of information displayed by the display means, sets the orientation of the displayed information to a predetermined orientation when a connection of the portable electronic device to the power supply adapter unit is detected.

A recording medium according to an embodiment of the present invention stores a program for setting the orientation of information displayed by a display means of a portable electronic device to a predetermined orientation depending on an apparatus or unit to which the portable electronic device is connected.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
FIG. 1 is a plan view of a video game apparatus as a master unit with which a portable electronic device according to an embodiment of the present invention is used as a slave unit;
FIG. 2 is a front view of the video game apparatus, showing slots thereof;
FIG. 3 is a perspective view of the video game apparatus;
FIG. 4 is a block diagram of a specific arrangement of major components of the video game apparatus;
FIG. 5 is a plan view of the portable electronic device;
FIG. 6 is a perspective view of the portable electronic device;
FIG. 7 is a perspective view of the portable electronic device with a lid being open;
FIG. 8 is a front elevational view of the portable electronic device with a lid being open;
FIG. 9 is a block diagram of an arrangement of major components of the portable electronic device;
FIG. 10 is a diagram showing control items that are carried out by a control means of the portable electronic device shown in FIG. 9;
FIG. 11 is a view illustrative of a wireless communication function performed by the portable electronic device;
FIG. 12 is a view illustrative of cooperative operation of the video game apparatus as a master unit and the portable electronic device as a slave unit;
FIG. 13 is a block diagram showing a flow of program data downloaded from the video game apparatus (master unit) to the portable electronic device (slave unit);
FIG. 14 is a flowchart of a sequence of downloading the program data shown in FIG. 13;
FIG. 15 is a block diagram showing another flow of program data downloaded from the video game apparatus (master unit) to the portable electronic device (slave unit);
FIG. 16 is a flowchart of a sequence of downloading the program data shown in FIG. 15;
FIG. 17 is a plan view illustrative of a connected state of the portable electronic device and a power supply adapter and display orientations of displayed data;
FIG. 18 is a side elevational view illustrative of the connected state of the portable electronic device and the power supply adapter;
FIG. 19 is a bottom view illustrative of the connected state of the portable electronic device and the power supply adapter;
FIG. 20 is a perspective view showing connecting members of the portable electronic device and the power supply adapter;
FIG. 21 is a view showing data displayed on the portable electronic device when the portable electronic device is connected to the power supply adapter and is not connected to another device;
FIG. 22 is a view showing data displayed on the portable electronic device when the portable electronic device is connected to the master unit and hence turned upside down as viewed from the user;
FIG. 23 is a flowchart of a program for inverting displayed data;
FIG. 24 is a block diagram of an arrangement of major components of an ordinary memory card device;
FIG. 25 is a diagram showing control items carried out by a control means of the ordinary memory card device shown in FIG. 24; and
FIG. 26 is a plan view of a video game apparatus which employs a memory card device as an auxiliary memory.

### DESCRIPTION OF THE PREFERRED EMBODIMENT

A preferred embodiment according to the present invention will be explained hereinbelow with reference to the accompanying drawings.

A portable electronic device according to the embodiment of the present invention can be used as a memory card device for use with an entertainment system such as a video game apparatus as a master unit, and can also be used singly as a portable small-size game machine. The master unit is not limited to a video game apparatus, and the portable electronic device as a slave unit may not necessarily have a memory card function.

A video game apparatus as an example of a master unit, with which a portable electronic device of an embodiment of the present invention is used as a slave unit, will first be described below.

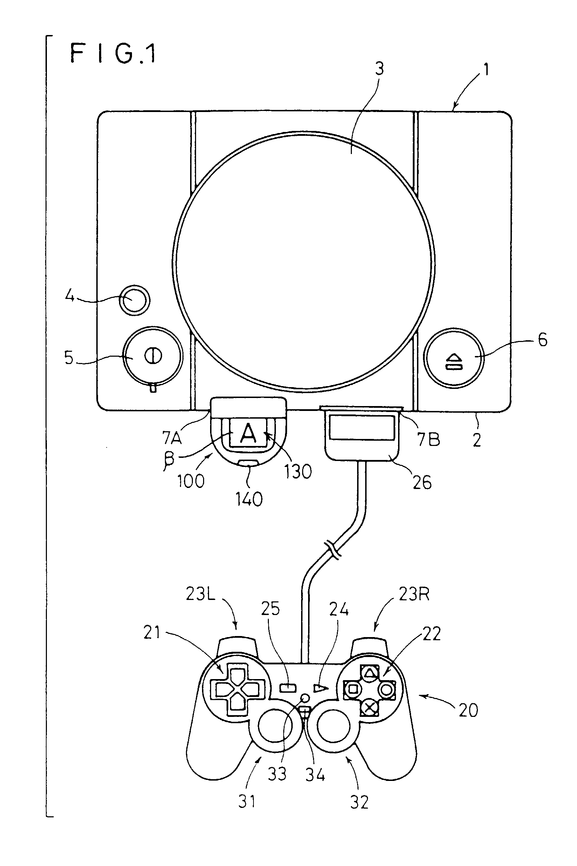

FIG. 1 shows the appearance of a video game apparatus 1 which is an entertainment apparatus as a master unit to which the portable electronic device of an embodiment of the present invention is connected. The video game apparatus 1 reads a program recorded in an optical disk or the like, for example, and executes a game, for example, based on the program depending on commands from the user, e.g., the game player. The execution of the game mainly represents controlling the progress of the game and the display of images and the generation of sounds.

The video game apparatus 1 has a rectangular casing 2 which houses a disk loading unit 3 substantially centrally therein for loading an optical disk such as a CD-ROM (Compact Disk ROM) or the like as a recording medium for supplying an application program recorded therein. The casing 2 supports a reset switch 4 for resetting a program which is being presently executed, a power supply switch 5, a disk control switch 6 for controlling the loading of the optical disk, and two slots 7A, 7B.

The video game apparatus 1 may be supplied with the application program via a communication link, rather than being supplied from the optical disk as the recording medium.

The video game apparatus 1 also includes a manual controller 20 for supplying user's commands to the video game apparatus 1.

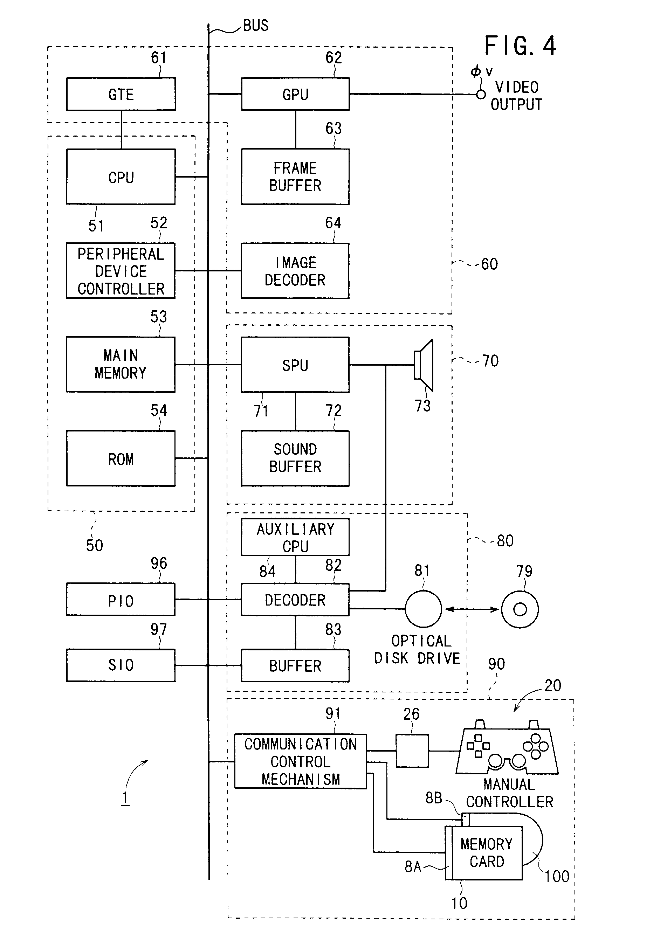

Two manual controllers 20 may be connected respectively to the slots 7A, 7B to allow two users or game players to play a competition game, for example. A memory card 10 (see FIG. 4) or a portable electronic device 100 according to the embodiment of the present invention may also be inserted into the slots 7A, 7B. While the two slots 7A, 7B are shown in FIG. 1, the video game apparatus 1 may have more or less than two slots.

As described in detail later on, as shown in FIG. 1, when the portable electronic device 100 is connected to one of the slots 7A, 7B (the slot 7A in FIG. 1) of the video game apparatus 1 and electric energy is supplied from the video game apparatus 1 to the portable electronic device 100, a display unit 130 of the portable electronic device 100 displays an alphabetical letter "A", for example, in an inverted display orientation β, i.e., in a display orientation inverted 180° from the display orientation in which data or letters are displayed on the display unit 130 for the user to see normally when the portable electronic device 100 is singly used.

The manual controller 20 has first and second control pads 21, 22, a left button 23L, a right button 23R, a start button 24, a selector button 25, analog control pads 31, 32, a mode selector switch 33 for selecting control modes for the analog control pads 31, 32, and an indicator 34 for indicating a selected control mode. The manual controller 20 also has a vibration imparting mechanism (not shown) disposed therein for imparting vibrations to the manual controller 20 depending on how the video game proceeds.

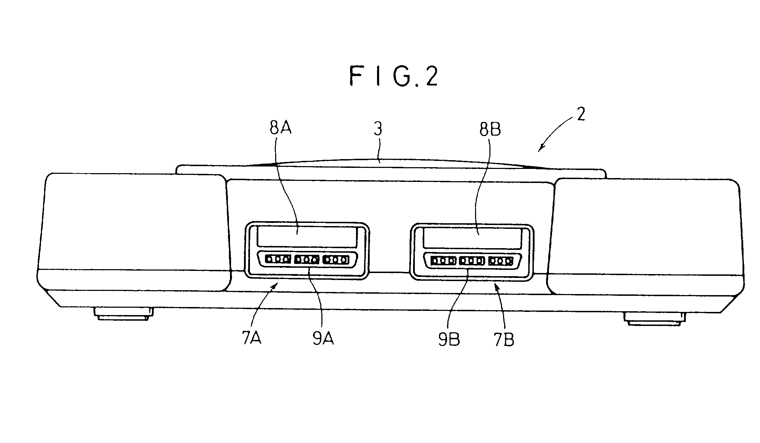

FIG. 2 shows the slots 7A, 7B which are defined in a front panel of the casing 2 of the video game apparatus 1.

Each of the slots 7A, 7B has upper and lower units. Specifically, the slots 7A, 7B have respective memory card insertion units 8A, 8B as their upper units for inserting a memory card 10 or the portable electronic device 100 therein and respective controller connectors (jacks) 9A, 9B as their lower units for connection to a connection terminal (connector) 26 of the manual controller 20.

The memory card insertion units 8A, 8B have respective insertion holes (slots) that are of a horizontally elongate rectangular shape. These insertion slots have lower opposite corners round in contrast to upper opposite corners thereof so that the memory card 10 will not be inserted into the memory card insertion units 8A, 8B in the wrong orientation. The memory card insertion units 8A, 8B also have shutters for protecting connection portable electronic devices disposed therein for electric connection.

The controller connectors 9A, 9B also have respective insertion holes (slots) that are of a horizontally elongate rectangular shape. These insertion slots have lower opposite corners round in contrast to upper opposite corners thereof so that the connector terminal 26 of the manual controller 20 will not be connected to the controller connectors 9A, 9B in the wrong orientation. The insertion holes of the controller connectors 9A, 9B are different in shape from the insertion holes of the memory card insertion units 8A, 8B so that the memory card 10 will not be inserted into the insertion holes of the controller connectors 9A, 9B.

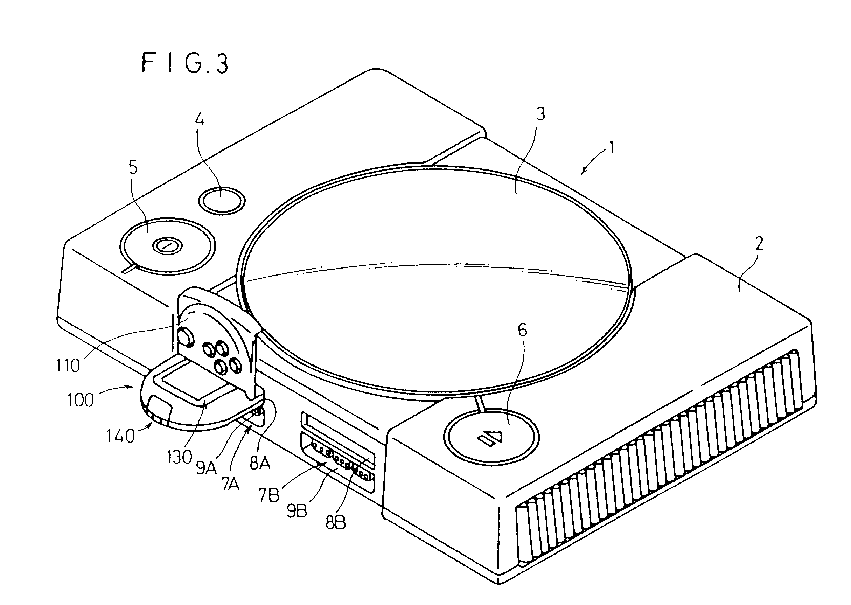

In FIG. 3, the portable electronic device 100 is inserted in the memory card insertion unit 8A in the slot 7A which is defined in the front panel of the video game apparatus 1.

A specific arrangement of the video game apparatus 1 will be described below with reference to FIG. 4. As shown in FIG. 4, the video game apparatus 1 comprises a control system 50 including a central processing unit (CPU) 51 and its peripheral devices, a graphic system 60 including a graphic processing unit (GPU) 62 for generating and storing image data in a frame buffer 63, a sound system 70 including a sound processing unit (SPU) 71 for generating music sounds and sound effects, an optical disk controller 80 for controlling an optical disk in which application programs are recorded, a communication controller 90 for controlling signals from the manual controller 20 which enter instructions from the user, data supplied to and from a memory card 10 which stores game settings and data supplied to and from the portable electronic device 100, and a BUS to which the control system 50, the graphic system 60, the sound system 70, the optical disk controller 80, and the communication controller 90 are connected.

The control system 50 comprises a CPU 51, a peripheral device controller 52 for controlling interrupts and direct memory access (DMA) data transfer, a main memory 53 comprising a random-access memory (RAM), and a read-only memory (ROM) 54 which stores various programs such as an operating system for managing the main memory 53, the graphic system 60, the sound system 70, etc. The main memory 53 is a memory capable of storing a program which is being executed.

The CPU 51 controls the video game apparatus 1 in its entirety by executing the operating system stored in the ROM 54. The CPU 51 comprises a 32-bit RISC-CPU, for example.

When the video game apparatus 1 is turned on, the CPU 51 executes the operating system stored in the ROM 54 to start controlling the graphic system 60, the sound system 70, etc. For example, when the operating system is executed, the CPU 51 initializes the video game apparatus 1 in its entirety for checking its operation, and thereafter controls the optical disc controller 80 to execute an application program recorded in the optical disk. As the application program is executed, the CPU 51 controls the graphic system 60, the sound system 70, etc. depending on commands entered from the user for thereby controlling the display of images and the generation of music sounds and sound effects.

The graphic system 60 comprises a geometry transfer engine (GTE) 61 for performing coordinate transformations and other processing, a GPU 62 for generating image data according to instructions from the CPU 51, a frame buffer 63 for storing image data generated by the GPU 62, and an image decoder 64 for decoding image data compressed and encoded by an orthogonal transform such as a discrete cosine transform.

The image decoder 64 is controlled by the CPU 51 to decode image data of a still or moving image stored in the main memory 53, and store the decoded image into the main memory 53.

Image data reproduced by the image decoder 64 is transferred to the frame buffer 63 by the GPU 62, and can be used as a background for an image plotted by the GPU 62.

The sound system 70 comprises an SPU 71 for generating music sounds, sound effects, etc. based on instructions from the CPU 51, a sound buffer 72 for storing waveform data from the SPU 71, and a speaker 73 for outputting music sounds, sound effects, etc. generated by the SPU 71.

The optical disk controller 80 comprises an optical disk drive 81 for reproducing application programs and data recorded on an optical disk such as a CD-ROM or the like, a decoder 82 for decoding programs and data that are recorded with an error correcting code added thereto, and a buffer 83 for temporarily storing data read from the optical disk drive 81 so as to allow the data from the optical disk to be read at a high speed. An auxiliary CPU 84 is connected to the decoder 82.

The communication controller 90 comprises a communication control mechanism 91 for controlling communication with the CPU 51 via the BUS. The communication control mechanism 91 has the controller connectors 9A, 9B to which the manual controller 20 for entering commands from the user is connected, and the memory card insertion units 8A, 8B for receiving a memory card 10 as an auxiliary memory device for storing game settings, etc. and the portable electronic device 100.

The manual controller 20 connected to one of the controller connectors 9A, 9B has 16 command keys, for example, for entering commands from the user, and transmits statuses of the command keys about 60 times per second to the communication control mechanism 91 by way of synchronous communication according to an instruction from the communication control mechanism 91. The communication control mechanism 91 transmits the statuses of the command keys to the CPU 51.

In this manner, commands from the user are applied to the CPU 51, which carries out a process according to the commands based on the game program being executed.

A large amount of image data needs to be transferred at high speed between the main memory 53, the GPU 62, the image decoder 64, and the decoder 82 for reading a program, displaying an image, or generating and storing image data.

In the video game apparatus 1, data are transferred directly between the main memory 53, the GPU 62, the image decoder 64, and the decoder 82 according to the DMA data transfer under the control of the peripheral device controller 52, rather than the CPU 51. Therefore, the burden on the CPU 51 can be reduced for data transfer, and high-speed data transfer can be achieved between the main memory 53, the GPU 62, the image decoder 64, and the decoder 82.

When setting data of a game being executed need to be stored, the CPU 51 transmits the setting data to the communication control mechanism 91, which writes the transmitted setting data into the memory card 10 or the portable electronic device 100 which is inserted in the memory card insertion unit 8A or 8B.

The communication control mechanism 91 has a built-in protection circuit for protection against electric breakdown. The memory card 10 and the portable electronic device 100 are separate from the BUS, and can be connected and disconnected while the video game apparatus 1 is being energized. Therefore, when the memory card 10 and the portable electronic device 100 suffer a storage capacity shortage, a new memory card can be connected without having to turn off the video game apparatus 1. Consequently, any game data that need to be backed up can be stored in a new memory card connected to the video game apparatus 1, without the danger of being lost.

As shown in FIG. 4, the video game apparatus 1 further includes a parallel I/O interface (PIO) 96 and a serial I/O interface (SIO) 97 which serve to connect the memory card 10 and the portable electronic device 100 to the video game apparatus 1.

The portable electronic device 100 according to the embodiment of the present invention will be described below. It is assumed that the portable electronic device 100 will be used as a slave unit connected to the video game apparatus 1 which serves as a master unit.

The portable electronic device 100 is inserted into one of the memory card insertion units 8A, 8B in the slots 7A, 7B of the video game apparatus 1, and can be used as a memory card 10 (see FIG. 24) inherent in the connected manual controller 20. For example, if two users or game players play a game on the video game apparatus 1, then two portable electronic devices 100 are connected to store game results of the respective users.

In order to electrically connect power supply terminals and ground terminals earlier than the other terminals when the memory card 10 and the portable electronic device 100 are inserted into the memory card insertion units 8A, 8B, those power supply terminals and ground terminals of connectors of the memory card 10 and the portable electronic device 100 are made longer than the other terminals for the purpose of achieving safety and stability of electric operation. Corresponding connector conductors of the memory card insertion units 8A, 8B may be made longer than the other connector conductors, or both power supply terminals and ground terminals of connectors of the memory card 10 and the portable electronic device 100 and the connector conductors of the memory card insertion units 8A, 8B may be made longer than the other terminals and connector conductors. Furthermore, the connectors of the memory card 10 and the portable electronic device 100 may be asymmetrically shaped in their longitudinal direction for preventing themselves from being inserted in the wrong direction.

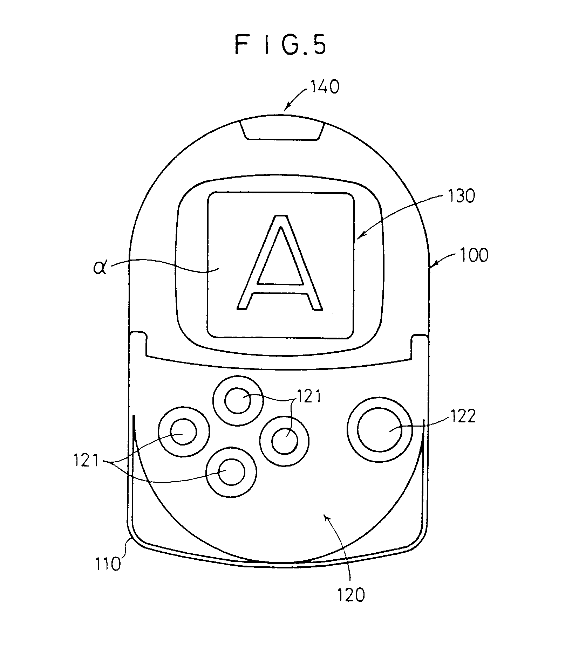

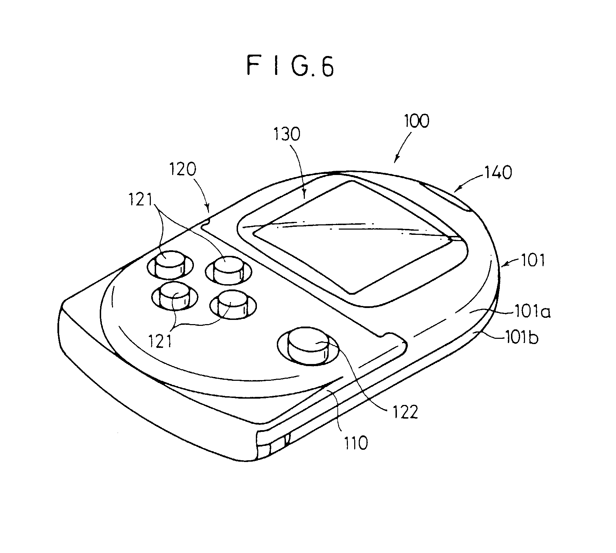

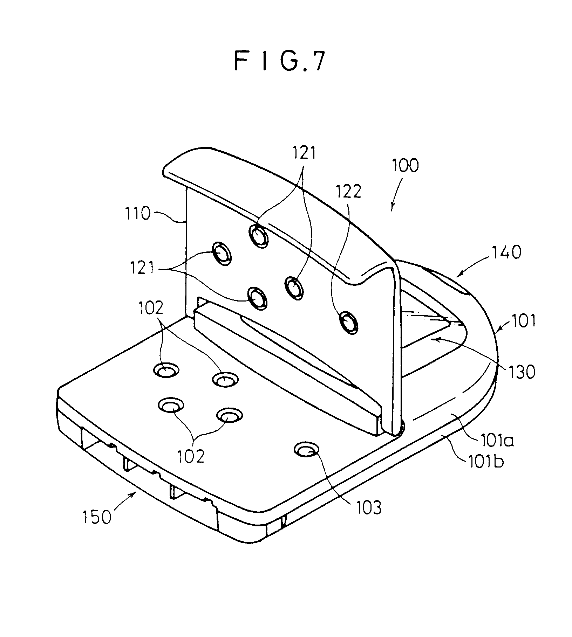

FIGS. 5 through 8 show the portable electronic device 100 in detail.

As shown in FIG. 5, when the portable electronic device 100 is used singly and powered by a battery mounted therein, the display unit 130 thereof displays the alphabetical letter "A", for example, in a normal display orientation a as described later on.

As shown in FIGS. 5 through 8, the portable electronic device 100 has a housing 101 which supports a manual control pad 120 having one or more direction buttons 121 and a decision button 122 for entering events and making various selections, a display unit 130 such as a liquid crystal display (LCD) unit or the like, and a window 140 for wireless communication such as infrared communication with a wireless communication command unit.

The housing 101 comprises an upper shell 101a and a lower shell 101b, and houses a board 151 which supports memory devices, etc. thereon. The housing 101 is shaped so as to be insertable into either one of the slots 7A, 7B in the casing 2 of the video game apparatus 1. The housing 101 has a connector 150 on the side of one end thereof which includes a rectangular window.

The window 140 is mounted on a substantially semicircular end of the housing 101 remote from the connector 150. The display unit 130 occupies a substantially half area of the upper shell 101a of the housing 101, and is positioned near the window 140. The manual control pad 120 occupies the other substantially half area of the upper shell 101a, and is positioned remotely from the window 140. The manual control pad 120 comprises a substantially square lid 110 that is angularly movably supported on the housing 101 and supports thereon the direction buttons 121 and the decision button 122, and switch pressers 102, 103 positioned in an area of the housing 101 which can be opened and closed by the lid 110.

The direction buttons 121 and the decision button 122 extend through the lid 110 from its upper surface to its lower surface. The direction buttons 121 and the decision button 122 are supported on the lid 110 for movement into and out of the upper surface of the lid 110.

The switch pressers 102, 103 have respective pressing elements supported on the housing 101 for movement into and out of the upper surface of the housing 101. When one of the pressing elements is pressed from above, it presses a corresponding a pressure switch such as a diaphragm switch, for example, mounted on the board 151 in the housing 101.

With the lid 110 closed, the switch pressers 102, 103 are held in vertical alignment with the direction buttons 121 and the decision button 122, respectively. Therefore, while the lid 110 is being closed over the housing 101, when the direction buttons 121 and the decision button 122 are pressed from above into the upper surface of the lid 110, the direction buttons 121 and the decision button 122 cause the pressing elements of the corresponding switch pressers 102, 103 to press corresponding pressure switches in the housing 101.

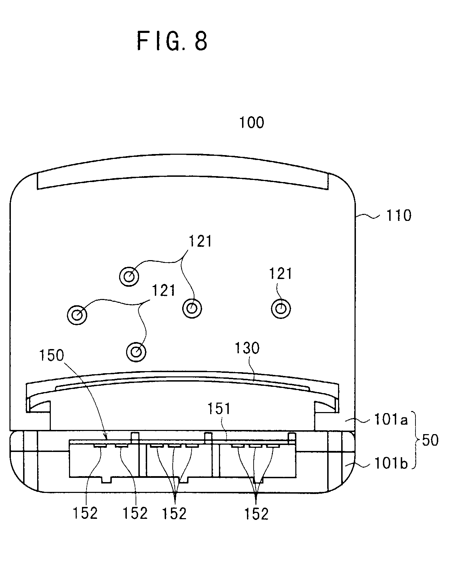

As shown in FIG. 8, power and signal terminals 152 are mounted on the board 151 and disposed in the window of the connector 150.

The connector 150 has a shape and dimensions that are identical to those of the memory card 10 used in the video game apparatus 1.

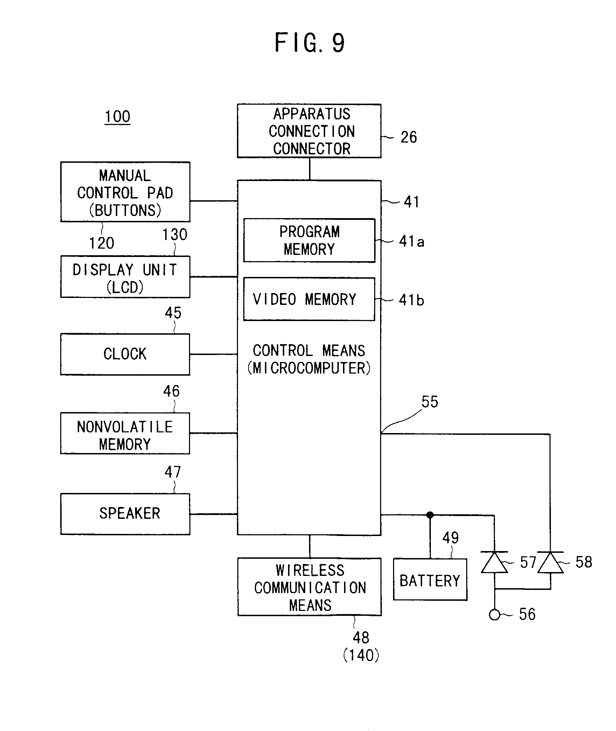

An arrangement of major components of the portable electronic device 100 will be described below with reference to FIG. 9.

As shown in FIG. 9, the portable electronic device 100 comprises a control means 41 for controlling operation of the portable electronic device 100, an apparatus connection connector 26 for connection to one of the slots 8A, 8Bb of the video game apparatus 1 as an information-handling apparatus, and a nonvolatile memory 46 for storing data and/or programs, as with the normal memory card 10 described above.

The control means 41 comprises a microcomputer, for example. The control means 41 has, disposed therein, a program memory 41a as a program storage means for storing a program, and a video memory 41b for storing display data to be displayed on the display unit (display means) 130. The nonvolatile memory 46 comprises a semiconductor memory such as a flash memory which is capable of retaining stored data even when the portable electronic device 100 is turned off.

The portable electronic device 100 has a battery 49 as described later on, and it can use a static random-access memory (SRAM) for inputting and outputting data at high speed, rather than the nonvolatile memory 46.

The control means 41 controls the execution of a program stored in the program memory 41a. The control means 41 also functions as a connection detecting means for detecting when the portable electronic device 100 is connected to the video game apparatus 1 as a master unit. Moreover, the control means 41 also serves as a display control means for inverting the display orientation of data on the display unit 130, i.e., for setting the display orientation of data on the display unit 130 to a predetermined direction when it detects the connection of the portable electronic device 100 to the video game apparatus 1, and inverting the display orientation of the data upside down when it subsequently detects the portable electronic device 100 being disconnected from or not connected to the video game apparatus 1.

In addition, the portable electronic device 100 has an event input means 120 such as control buttons for controlling a stored program, a display means 130 such as a liquid crystal display (LCD) unit or the like for displaying various items of information depending on the program via the video memory 41b, a wireless communication means 48 for sending data to and receiving data from another memory card or the like through an infrared radiation or the like via the window 140, and a battery 49 for supplying electric energy to various components of the portable electronic device 100.

The battery 49, which serves as a small-size power supply means, allows the portable electronic device 100 to operate independently even when it is removed from the slots 7A, 7B of the video game apparatus 1. The battery 49 may comprise a chargeable secondary battery. When the portable electronic device 100 is inserted in one of the slots 7A, 7B of the video game apparatus 1, the portable electronic device 100 is supplied with electric energy from the video game apparatus 1 via a power supply terminal 56 and a diode 57 from a power supply means in the video game apparatus 1. Specifically, the battery 49 has a connection terminal which is connected to the power supply terminal 56 via a reverse-current prevention diode 57. When the portable electronic device 100 is inserted in one of the slots 7A, 7B of the video game apparatus 1, electric energy is supplied from the video game apparatus 1 to the portable electronic device 100, and if the secondary battery is used as the battery 49, the secondary battery is charged by part of the supplied electric energy.

The power supply terminal 56 is connected to a port 55 of the control means 41 via another diode 58. When the port 55 is supplied with electric energy via the diode 58, the control means 41 determines that it is supplied with electric energy from the video game apparatus 1 or a power supply adapter unit (described later on). When the port 55 is not supplied with electric energy via the diode 58, the control means 41 determines that it is supplied with electric energy from the battery 49.

The portable electronic device 100 also has a clock 45 and a speaker 47 as a sound generating means for generating sounds according to the program. The above components of the portable electronic device 100 are connected to the control means 41, and operate under the control of the control means 41.

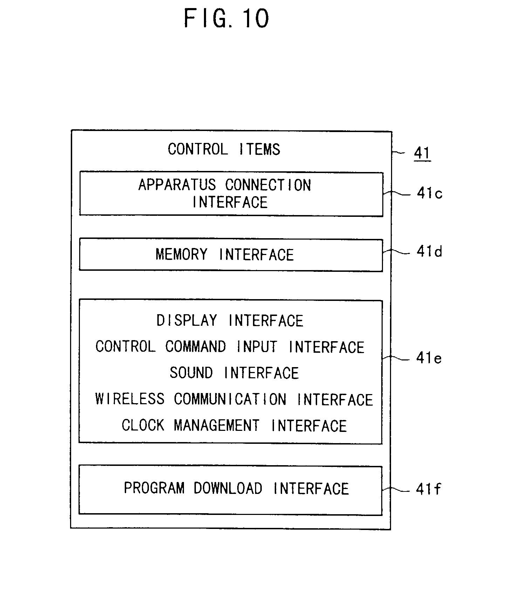

FIG. 10 shows control items that are carried out by the control means 41. Whereas the ordinary memory card 10 has only an apparatus connection interface 41c (the apparatus connection interface lla shown in FIG. 25) for connection to the information-handling apparatus and a memory interface 41d (the memory interface 11b shown in FIG. 25) for entering data into and retrieving data from the nonvolatile memory 46, the portable electronic device 100 has, in addition to those interfaces, an interface assembly 41e including a display interface, a control command input interface, a sound interface, a wireless communication interface, and a clock management interface, and a program download interface 41f.

Since the control means 41 of the portable electronic device 100 has interfaces (drivers) for managing functions added according to the embodiment of the present invention, independently of the management for the apparatus connection interface and the nonvolatile memory interface, which are conventional functions, the portable electronic device 100 is compatible with the conventional functions.

The portable electronic device 100 can be used as a portable game device when a game application is executed, because it has the event input means 120 such as control buttons for controlling a program being executed, and the display means 130 in the form of a liquid crystal display (LCD) unit or the like.

The portable electronic device 100 has a function to store a program downloaded from the video game apparatus 1 into the program memory 41a of the microcomputer 41. Therefore, an application program and various driver software that operate in the portable electronic device 100 can easily be changed.

As described above, the portable electronic device 100 can be controlled in operation independently of the video game apparatus 1. Therefore, the portable electronic device 100 can generate data according to an application stored in the program memory 41a as the program storage means, independently of the application software in the video game apparatus 1. If the data thus generated is exchanged between the portable electronic device 100 and the video game apparatus 1, then the portable electronic device 100 and the video game apparatus 1 are capable of cooperative operation, i.e., can be linked to each other.

The clock 45 allows the portable electronic device 100 to share time data with the video game apparatus 1. Specifically, not only the portable electronic device 100 and the video game apparatus 1 can have time data equalized to each other, but they can share data for controlling the progress of games which they execute independently of each other, according to real time.

A specific example of cooperative operation between the terminal 100 and the video game apparatus 1 will be described later on.

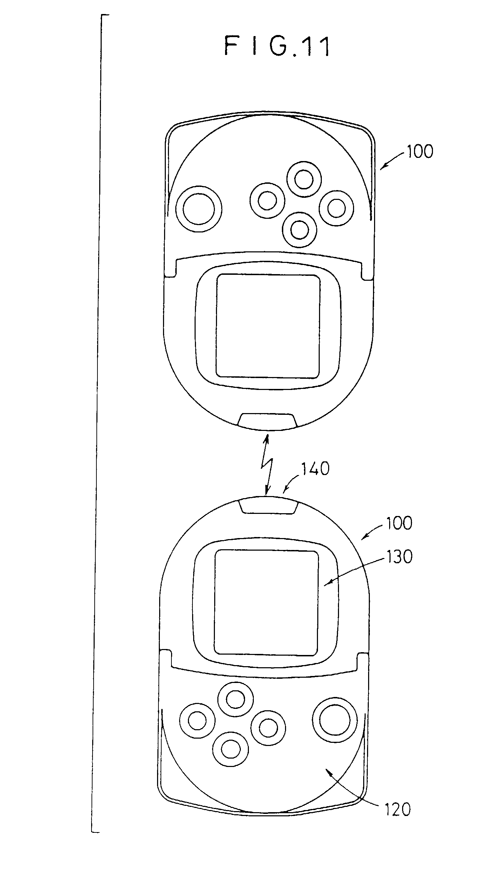

FIG. 11 schematically illustrates the manner in which wireless communications are carried out between two portable electronic devices 100. The wireless communication means 48 of the portable electronic devices 100 can send data to and receive data from each other via the windows 140 which serve as wireless communication windows for effecting wireless communications with infrared rays or the like. Therefore, a plurality of portable electronic devices 100 are allowed to exchange internal data with each other. The internal data include data transferred from the information-handling apparatus such as the video game apparatus 1 and stored in the nonvolatile memory 46 and the program memory 41a in the portable electronic device 100.

The portable electronic device 100 has been described as an auxiliary storage unit for the video game apparatus 1. However, the portable electronic device 100 can be used in various applications.

A specific example of cooperative operation between the portable electronic device 100 and the video game apparatus 1 will be described below.

As described above, the portable electronic device 100 can share game data generated by the control means or microcomputer 41, time data produced by the clock 45 in the portable electronic device 100, and data generated by another portable electronic device 100 and transmitted via the wireless communication means 48, with the video game apparatus 1.

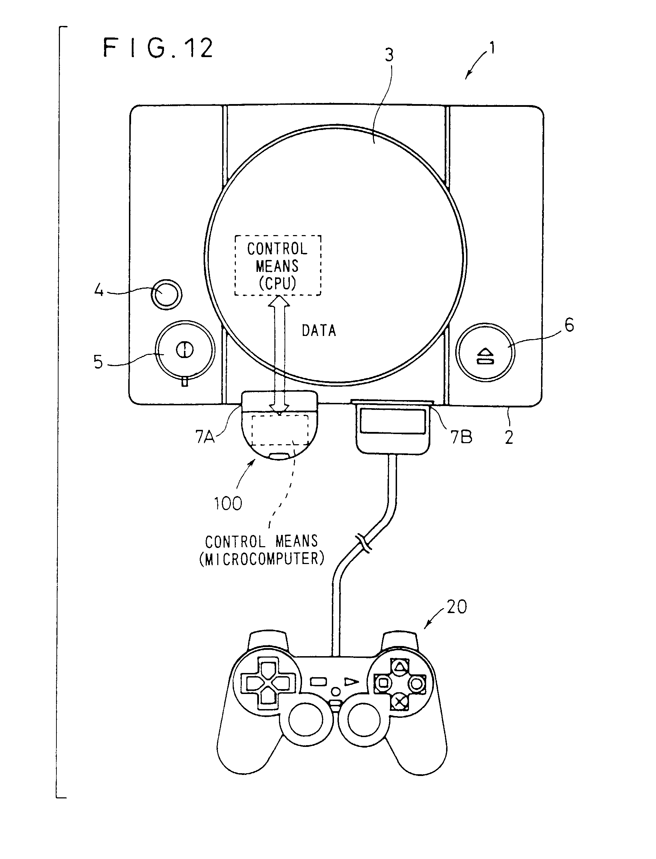

FIG. 12 is illustrative of cooperative operation of the video game apparatus 1 as the master unit and the portable electronic device 100 as the slave unit.

In the specific example of cooperative operation, an optical disk (CD-ROM) 79 (see FIG. 4) as a recording medium with an application software program recorded therein is loaded in the video game apparatus 1, and the program read from the optical disk is downloaded to the portable electronic device 100 inserted in the slot 7A of the video game apparatus 1.

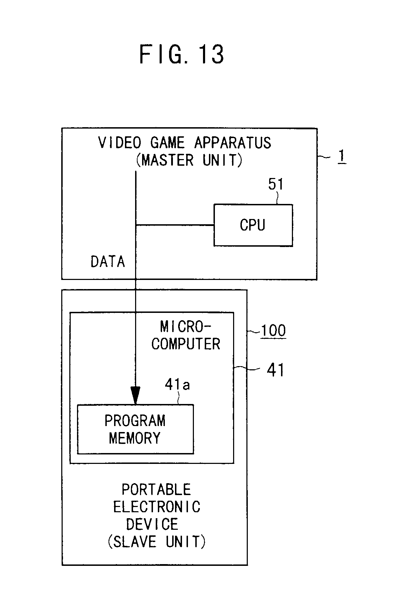

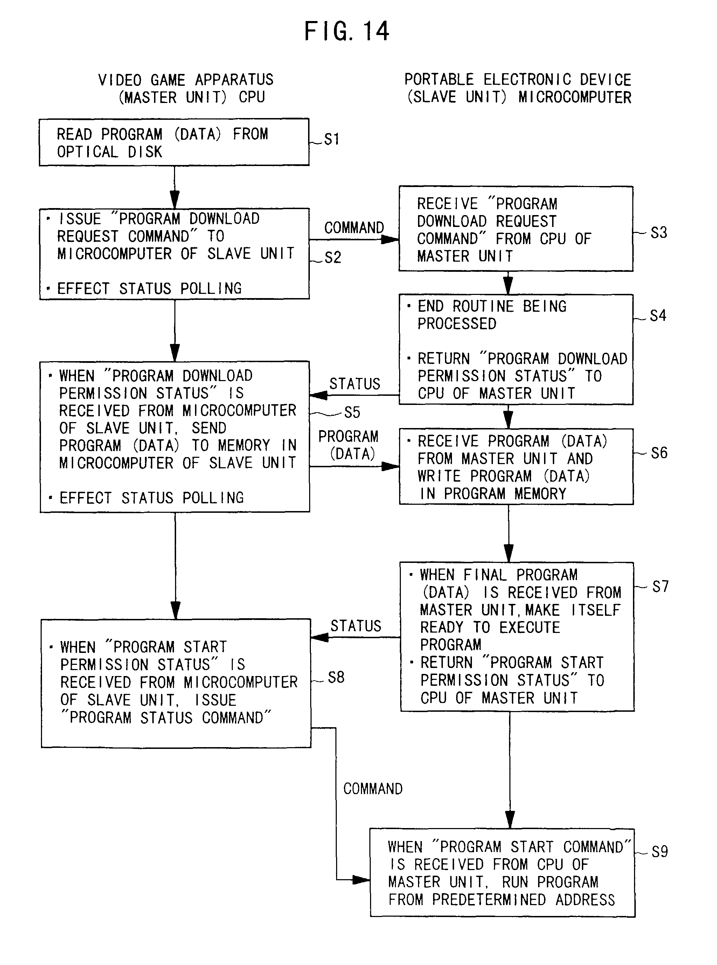

Prior to describing the specific example of cooperative operation, a process of downloading the program as a basis for such cooperative operation will first be described below with reference to FIGS. 13 and 14.

FIG. 13 shows a flow of program data which occurs when an application program such as of a video game supplied from the optical disk (CD-ROM) 79 loaded in the disk loading unit 3 of the video game apparatus 1 is directly transferred (downloaded) via the CPU 51 of the video game apparatus 1 to the program memory 41a in the microcomputer 41 of the portable electronic device 100.

FIG. 14 shows a sequence of downloading the program data shown in FIG. 13.

In step Sl shown in FIG. 14, an application program of a video game which is to be run by the microcomputer 41 in the portable electronic device 100 (hereinafter also referred to as "slave unit") is read as data from the optical disk 79 loaded in the disk loading unit 3 of the video game apparatus 1 (hereinafter also referred to as "master unit"). Generally, the application program thus read is different from an application program that is run by the video game apparatus 1.

In step S2, the CPU 51 issues a "program download request command" to the microcomputer 41. The CPU 51 performs polling in order to receive a "program download permission status" from the microcomputer 41. The polling refers to a process of interrogation to determine whether there is a service request or not.

In step S3, the microcomputer 41 receives the "program download request command" from the CPU 51.

In step S4, when the microcomputer 41 finishes a routine which is being presently executed and is able to execute program downloading, the microcomputer 41 returns the "program download permission status" to the CPU 51.

In step S5, when the CPU 51 receives the "program download permission status" from the microcomputer 41, the CPU 51 transfers (downloads) the program read from the CD-ROM in step S1 to the program memory 41a of the portable electronic device 100 and stores the program in the program memory 41a. The CPU 51 performs polling to receive a "program start permission status" from the microcomputer 41.

The addresses of the program memory 41a where the downloaded data are stored are managed by the microcomputer 41. While the program downloaded from the master unit has been described as being stored in the program memory 41a, the program may be stored in a memory such as a SRAM or the like capable of inputting and outputting data at high speed.

In step S6, the microcomputer 41 receives the program transferred from the master unit as data, and stores the received program in the program memory 41a. At this time, the CPU 51 sees the program data as being directly stored in the program memory 41a of the portable electronic device 100. As described above, the addresses of the program memory 41a are managed by the microcomputer 41.

In step S7, when the microcomputer 41 receives final program data from the master unit and is ready to execute the program, the microcomputer 41 returns the "program start permission status" to the CPU 51.

In step S8, the CPU 51 receives the "program start permission status" from the microcomputer 41, and issues a "program start command".

In step S9, when the microcomputer 41 receives the "program start command" from the CPU 51, the microcomputer 41 starts to run the program from a predetermined address.

According to the above processing sequence, the application program is directly transferred (downloaded) from the video game apparatus 1 to the program memory 41a in the microcomputer 41 of the portable electronic device 100 that is inserted in the video game apparatus 1.

As described above, the means for supplying the application program is not limited to the recording medium such as an optical disk 79 or the like, but the application program may be supplied via a communication link. If the application program is supplied via a communication link, then only the processing in step S1 shown in FIG. 14 is changed.

The above downloading process downloads the application program directly from the video game apparatus 1 to the program memory 41a in the microcomputer 41 of the portable electronic device 100 that is inserted in the video game apparatus 1.

However, the CPU 51 may first download data of an application program to the nonvolatile memory 46 in the portable electronic device 100, and thereafter the application program data may be copied to the program memory 41a in the microcomputer 41, after which the application program may be executed.

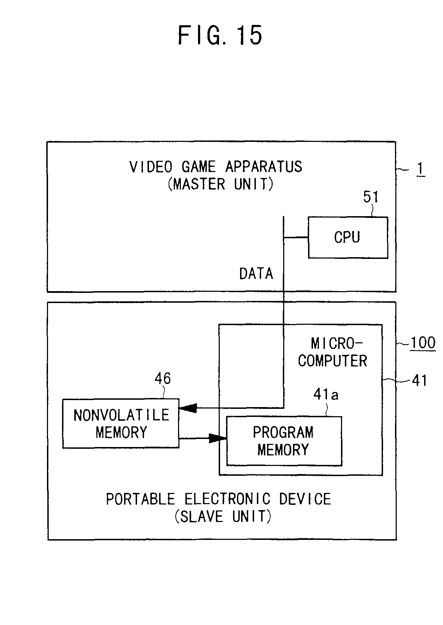

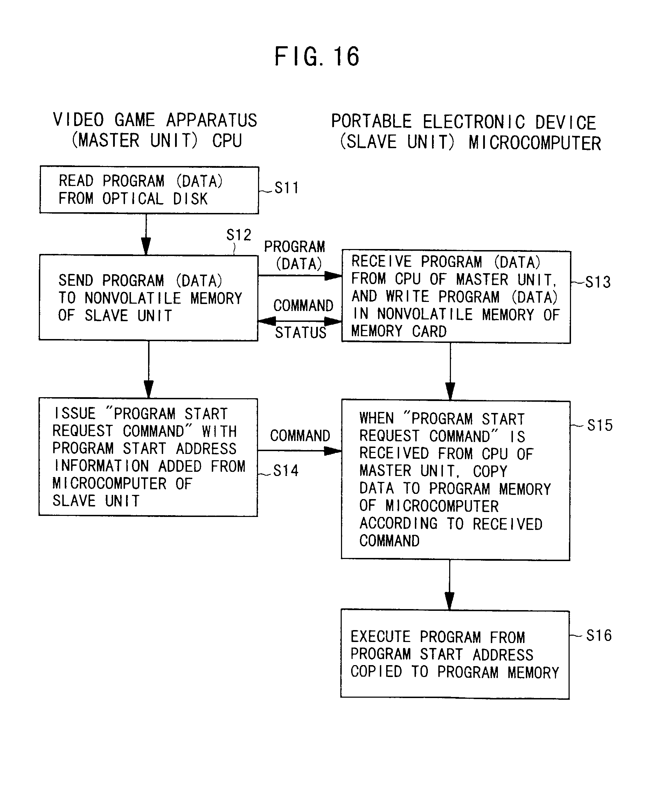

FIG. 15 shows such a flow of program data, and FIG. 16 shows a sequence of downloading the program data shown in FIG. 15.

As shown in FIG. 15, an application program of a video game which is supplied from the CD-ROM 79 loaded in the disk loading unit 3 of the video game apparatus 1 is transferred (downloaded) via the CPU 51 of the video game apparatus 1 to the nonvolatile memory 46 in the portable electronic device 100, thereafter copied to the program memory 41a in the microcomputer 41, and then executed.

In step S11 shown in FIG. 16, an application program of a video game which is to be run by the microcomputer in the portable electronic device 100 is read as data from the CD-ROM 79 loaded in the disk loading unit 3 of the video game apparatus 1.

In step S12, the CPU 51 transfers (downloads) the program data read from the CD-ROM 79 to the nonvolatile memory 46 in the portable electronic device 100. This process is the same as when data are backed up in a conventional video game apparatus.

In step S13, the microcomputer 41 receives the program transferred from the CPU 51 as data, and stores the received program data in the nonvolatile memory 46, in the same manner as with the conventional data backup process.

In step S14, the video game apparatus 1 issues a "program start request command" with an address added where the downloaded program is to start.

In step S15, when the microcomputer 41 receives the "program start request command" from the CPU 51, the microcomputer 41 copies data of an indicated size to the program memory 41a from the address indicated by the above command in the nonvolatile memory 46.

In step S16, the microcomputer 41 executes the program copied to the program memory 41a from its starting address.

According to the above process, the program of the application software is transferred (downloaded) from the video game apparatus 1 via the nonvolatile memory 46 to the program memory 41a in the microcomputer 41 of the portable electronic device 100.

Generally, the application program downloaded from the video game apparatus 1 to the portable electronic device 100 is different from an application program that is run by the video game apparatus 1. However, the downloaded application program may be run on both the video game apparatus 1 and the portable electronic device 100. In such a case, the CPU of the video game apparatus 1 and the microcomputer of the portable electronic device 100 need to comprise identical processors.

A process of cooperative operation in which an application software program downloaded from the video game apparatus 1 as described above is independently executed by the portable electronic device 100, and results of the executed application software program are sent to the video game apparatus 1 will be described below.

In the process of cooperative operation, attribute data of a person or character that appear in a role-playing game or the like played by the video game apparatus 1 are downloaded to the portable electronic device 100. The attribute data are representative of extents of growth, personalities, etc.

The person or character in the role-playing game or the like is grown on the program executed by the microcomputer 41 of the portable electronic device 100, so that the attributes thereof are changed independently of the program that is executed by the video game apparatus 1.

The portable electronic device 100 is arranged to be able to operate independently, and is small in size and can conveniently be carried around. Therefore, the user (game player) can carry and grow a person or character according to the program executed by the portable electronic device 100. The user can also transfer (upload) the attributes of the person or character that the user has grown from the portable electronic device 100 to the video game apparatus 1. When the attributes of the person or character that the user has grown are transferred from the portable electronic device 100 to the video game apparatus 1, the person or character whose attributes have been changed can be incorporated in the program executed by the video game apparatus 1.

As described above, the attributes of a person or character can be shared by the video game apparatus 1 and the portable electronic device 100, and can be changed by each other, thereby making the video game capable of developing itself based on cooperative operation of the video game apparatus 1 and the portable electronic device 100.

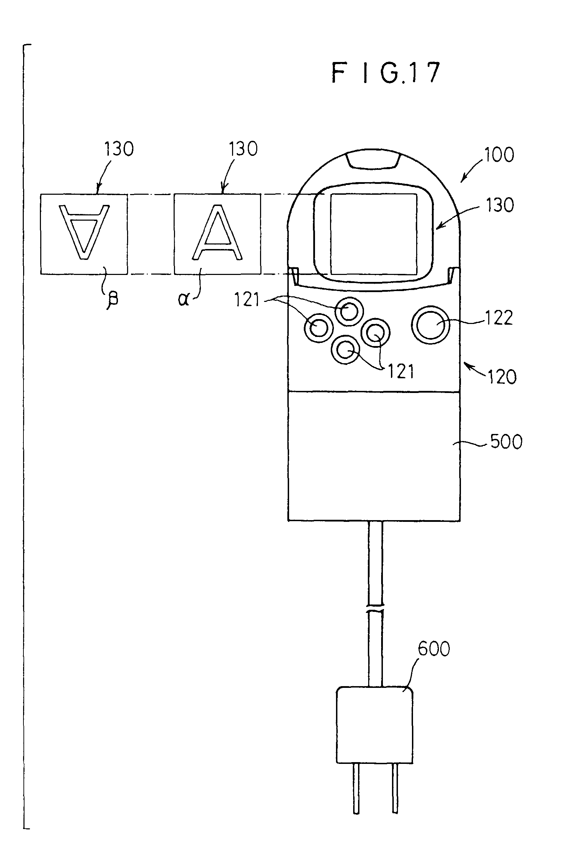

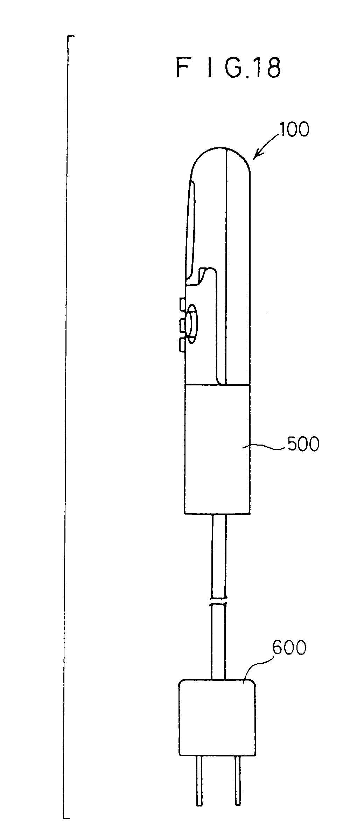

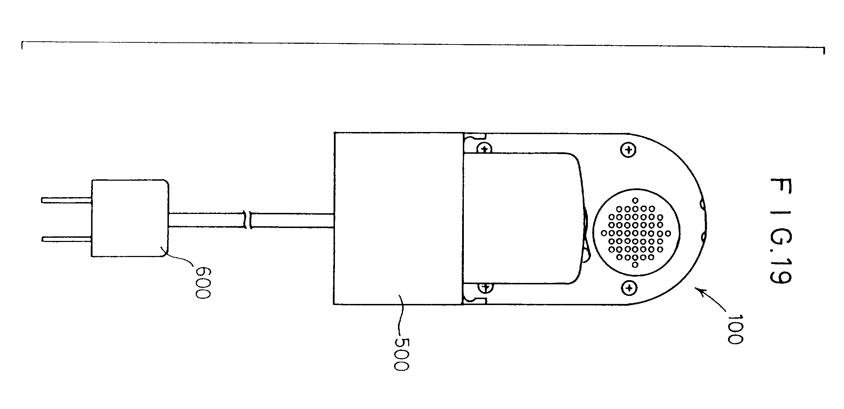

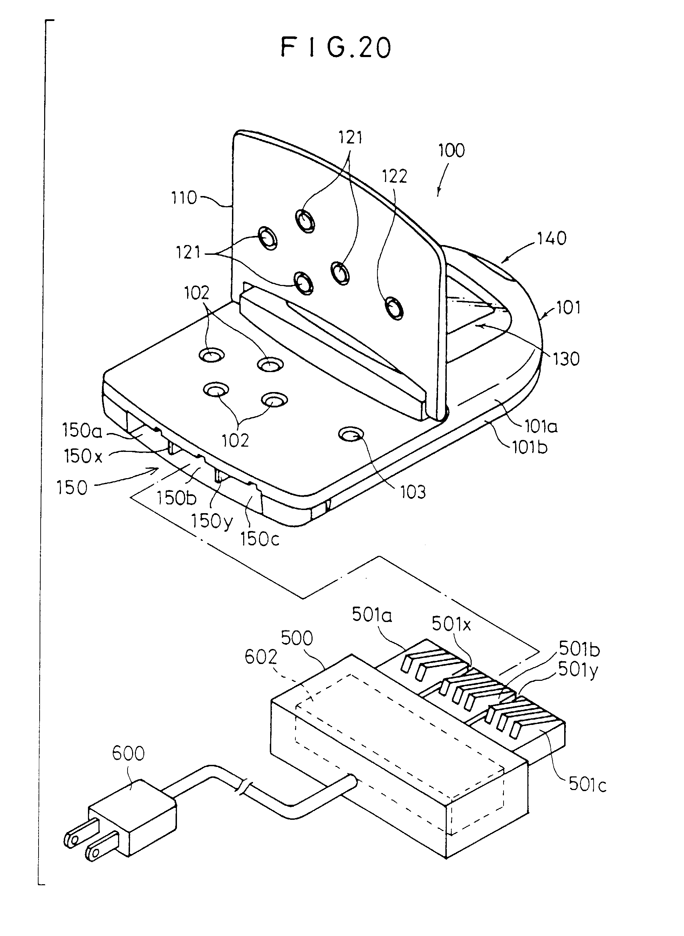

Changing data displayed on the display unit 130 of the portable electronic device 100 depending on how the portable electronic device 100 is connected will be described below with reference to FIGS. 17 through 23. It is assumed in the description which follows that the lid 110 (see FIGS. 3, 6, 7, and 8) of the portable electronic device 100 does not have the L-shaped cover for covering the power and signal terminals 152 of the connector 150, as shown in FIG. 20.

As shown in FIG. 17, when electric energy is supplied from a power supply adapter unit 500 to the portable electronic device 100, the display unit 130 first displays an alphabetical letter "A", for example, in the upside-down display orientation β. Then, when one of the direction buttons 121 and the decision button 122 is pressed once, the alphabetical letter "A" is inverted into the normal display orientation α. Insofar as the portable electronic device 100 is energized by the power supply adapter unit 500, the alphabetical letter "A" remains to be displayed in the normal display orientation α.

The power supply adapter unit 500 has a power supply circuit 602 (see FIG. 20) serving as a power supply means for converting the commercial power supply from a plug 600 into a power supply for energizing the portable electronic device 100. The converted power supply for energizing the portable electronic device 100 has a DC voltage which is slightly higher than the forward voltage that renders the diodes 51, 50 conductive against the voltage of the battery 49.

As shown in FIG. 20, the power supply adapter unit 500 has connectors 501a, 501b, 501c as connector means for insertion into respective openings 150a, 150b, 150c in the connector 150 of the portable electronic device 100. When the connectors 501a, 501b, 501c are inserted into respective openings 150a, 150b, 150c, their pin-type terminals are brought into abutment against respective terminals (not shown) of the connector 150, thus electrically connecting the power supply adapter unit 500 to the portable electronic device 100.

At this time, ribs 150x, 150y of the connector 150 are inserted respectively into grooves 501x, 501y in the power supply adapter unit 500. The connector 501a is narrower than the other connectors 501b, 501c, and has a corner or corners rounded for preventing the power supply adapter unit 500 from being inserted in a wrong attitude into the connector 150.

As shown in FIGS. 17, 18, and 19, when the portable electronic device 100 is connected to the power supply adapter unit 500, the power supply circuit 602 (see FIG. 20) of the power supply adapter unit 500 supplies electric energy via the terminal 56 (see FIG. 9), the diode 57, and the diode 58 to the control means 41 of the portable electronic device 100. When the portable electronic device 100 is connected to the video game apparatus 1, electric energy is supplied from the video game apparatus 1 via the terminal 56 and the diode 57 to the portable electronic device 100.

The display unit 130 displays data in three different display orientations (1), (2), and (3), described below, depending on how the portable electronic device 100 is connected.

(1) When the portable electronic device 100 is singly used, i.e., when the portable electronic device 100 is energized by the battery 49 thereof, the control means 41 controls the video memory 41b to display data on the display unit 130 in the normal display orientation a as shown in FIG. 5.

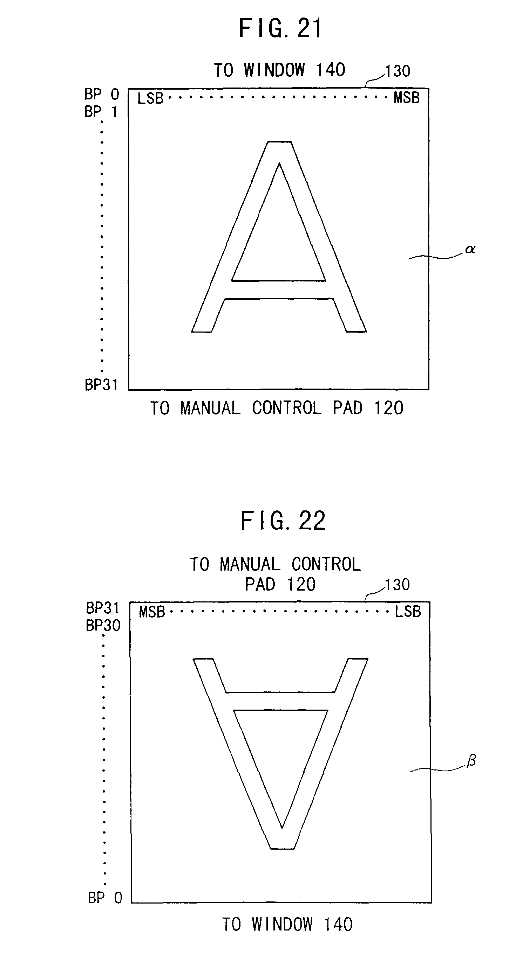

The normal display orientation is a display orientation in which, as shown in FIG. 21, the displayed data is vertically oriented in a direction which is the same as the vertical direction of the portable electronic device 100 in which the display unit 130 is in an upper position and the manual control pad 120 is in a lower position, i.e., the vertical direction of the displayed data is the same as the normal vertical direction of the portable electronic device 100. Stated otherwise, the normal display orientation is a display orientation in which the display unit 130 disposed below the window 140 is in an upper position and the manual control pad 120 is in a lower position. This display orientation is referred to as the normal display orientation α.

In the normal display orientation α, as shown in FIG. 21, the alphabetical letter "A" is displayed as it is in its normal orientation (see also FIG. 5). FIG. 21 also shows a conceptual representation of the association between the display unit 130 and the video memory 41b of the portable electronic device 100.

(2) When the portable electronic device 100 is connected to the video game apparatus 1 or the power supply adapter unit 500 and supplied with electric energy therefrom, the control means 41 detects the supply of electric energy from the external source via the diode 58 and the port 55, and controls the video memory 41b to display data on the display unit 130 in a display orientation opposite to the normal display orientation α.

The display orientation opposite to the normal display orientation a is a display orientation opposite to the display orientation in which, as shown in FIG. 21, the displayed data is vertically oriented in a direction which is the same as the vertical direction of the portable electronic device 100 in which the display unit 130 is in an upper position and the manual control pad 120 is in a lower position, i.e., the vertical direction of the displayed data is opposite to the normal vertical direction of the portable electronic device 100. Stated otherwise, as shown in FIG. 22, the display orientation opposite to the normal display orientation α is a display orientation in which the display unit 130 is in a lower position and the manual control pad 120 is in an upper position. This display orientation is referred to as the inverted display orientation β (see FIGS. 1 and 17).

In the inverted display orientation β, the alphabetical letter "A" is displayed upside down on the display unit 130, as shown in FIG. 22 (see also FIG. 1). FIG. 22 also shows a conceptual representation of the association between the display unit 130 and the video memory 41b of the portable electronic device 100.

The inverted display orientation β continues under the control of the control means 41 insofar as the portable electronic device 100 is connected to the casing 2 of the video game apparatus 1 and supplied with electric energy therefrom, as shown in FIG. 1.

The inverted display orientation β shown in FIG. 22 is selected under the control of the control means 41 when the portable electronic device 100 is connected to the power supply adapter unit 500, as shown in FIG. 17, and the manual control pad 120 (the buttons 121, 122) the portable electronic device 100 has never been pressed after the plug 600 has been connected to a commercial power supply outlet.

(3) As described above under (2), when the portable electronic device 100 is connected to the power supply adapter unit 500, the control means 41 recognizes the supply of electric energy from the power supply adapter unit 500. At this time, the control means 41 first controls the video memory 41b to display the letter "A" in the inverted display orientation β as shown in FIG. 22. Thereafter, when the control means 41 detects a pressing of the manual control pad 120, the control means 41 controls the video memory 41b to display the letter "A" in the normal display orientation a on the display unit 130, as shown in FIG. 17 or 21.

An example of inversion of the display orientation on the display unit 130 will be described below with reference to FIGS. 21 and 22.

As described above, FIG. 21 shows the normal display orientation a which is selected when the portable electronic device 100 is connected to the power supply adapter unit 500 and the manual control pad 120 is pressed at least once, or when the portable electronic device 100 is not connected to another electronic device, or when the portable electronic device 100 is disconnected to the video game apparatus 1 and used singly.

Only when the display unit 130 displays data in the inverted display orientation β upon detection of a transition from the connected state to the non-connected (disconnected) state of the portable electronic device 100 based on whether there is supplied electric energy or not or based on communications, e.g., when the portable electronic device 100 is connected to the video game apparatus 1, the control means 41 inverts the inverted display orientation β into the normal display orientation α. However, when the display unit 130 displays data in the inverted display orientation a upon a transition from the connected state to the non-connected state of the portable electronic device 100, e.g., when the portable electronic device 100 is connected to the power supply adapter unit 500 and the manual control pad 120 has been pressed once, the control means 41 does not invert the normal display orientation α.

FIG. 22 is also illustrative of the inverted display orientation β at the time the portable electronic device 100 is connected to the video game apparatus 1, i.e., the connected portable electronic device 100 is directed upside down with respect to the user.

The video memory 41b of the control means 41 shown in FIG. 9 comprises 32 32-bit registers.

In FIGS. 21 and 22, reference characters BP0 - BP31 correspond the respective 32 registers (hereinafter referred to as "registers BP0 - BP31") of the video memory 41b. Each of the registers BP0 - BP31 has 32 bits ranging from an LSB (Least Significant Bit) to an MSB (Most Significant Bit).

As shown in FIG. 21, for the normal display orientation α, data are written successively from the register BP0 to the register BP31 of the video memory 41b in a downward direction on the display screen of the display unit 130 and successively from the LSB to the MSB of the video memory 41b in a rightward direction on the display screen of the display unit 130.

As shown in FIG. 22, for the inverted display orientation β, data are written successively from the register BP31 to the register BP0 of the video memory 41b in a downward direction on the display screen of the display unit 130 and successively from the MSB to the LSB of the video memory 41b in a rightward direction on the display screen of the display unit 130.

While the power supply adapter unit 500 has been described as being connected to the commercial power supply, the power supply adapter unit 500 may have a built-in battery therein. If the power supply adapter unit 500 has a built-in battery therein, then it can be carried to a desired place.

The video memory 41b may not employ the registers BP0 - BP31, but may comprise a frame buffer such as an SRAM or the like. If the video memory 41b comprises a frame buffer, a readout address is selected to be an address corresponding to the upper left position of the display screen. For the normal display orientation α, a writing start address is set to the upper left position of the display screen. For the inverted display orientation β, a writing start address is set to the lower right position of the display screen.

While the portable electronic device 100 is being connected to the video game apparatus 1, the user cannot press the manual control pad 120 of the portable electronic device 100. While the portable electronic device 100 is being connected to the power supply adapter unit 500, as shown in FIG. 17, the user can press the manual control pad 120 of the portable electronic device 100. Accordingly, the display orientation depending on the apparatus or unit to which the portable electronic device 100 is connected can be achieved with a highly simple arrangement.

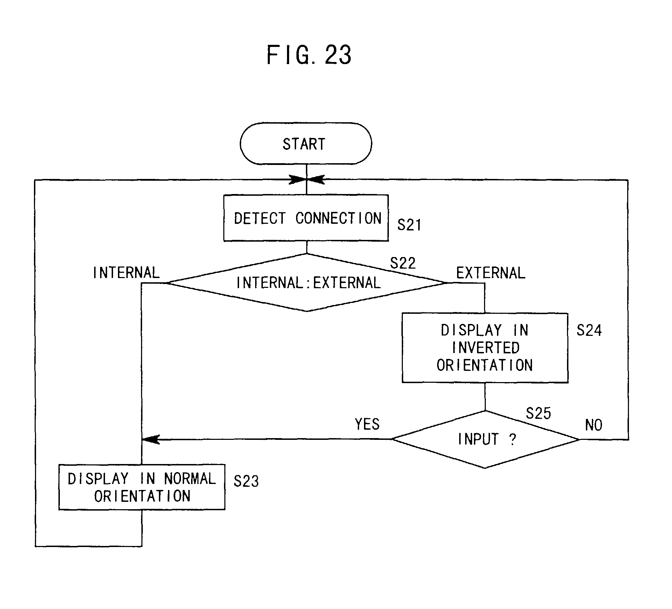

A program for inverting displayed data as shown in FIG. 23 is stored in a recording medium, e.g., the nonvolatile memory 46. When one of the events (1), (2), and (3) described below occurs, the program for inverting displayed data is read from the nonvolatile memory 46, written into the program memory 41a, and executed by the control means (microcomputer) 41.

Specifically, the program for inverting displayed data is executed by the control means 41 (1) when the portable electronic device 100 is turned on at the time it is used singly, or (2) when the portable electronic device 100 is inserted into the slot 7A of the video game apparatus 1 and the video game apparatus 1 is turned on (the video game apparatus 1 may have already been turned on), or (3) when the portable electronic device 100 is connected to the power supply adapter unit 500 and the power supply adapter unit 500 is turned on (the power supply adapter unit 500 may have already been turned on).

The program for inverting displayed data shown in FIG. 23 may be stored in the optical disk 79, and when the portable electronic device 100 is connected to the video game apparatus 1, the program for inverting displayed data may be downloaded from the video game apparatus 1 directly to the program memory 41a of the portable electronic device 100, as described above with reference to FIG. 13, or the program for inverting displayed data may be downloaded from the video game apparatus 1 via the nonvolatile memory 46 to the program memory 41a, as described above with reference to FIG. 15, after which the program for inverting displayed data may be executed by the control means (microcomputer) 41.

The program for inverting displayed data will be described below with reference to FIG. 23. In step S21 shown in FIG. 23, the control means 41 detects a connection of the portable electronic device 100. Specifically, the control means 41 detects whether the portable electronic device 100 is connected to the video game apparatus 1 or the power supply adapter unit 500 based on whether communications can be established to the video game apparatus 1 via the apparatus connection connector 26 or whether electric energy is supplied to the port 55.

If electric energy is not supplied to the port 55 in step S21, then the control means 41 determines in step S22 that the portable electronic device 100 operates singly based on the supply of electric energy from the battery 49. In step S23, the control means 41 displays data in the normal display orientation α, which represents a display orientation at the time the internal power supply is employed, on the display unit 130, as shown in FIG. 5.

If electric energy is supplied to the port 55 in step S21, then the control means 41 determines in step S22 that the portable electronic device 100 is supplied with electric energy from the video game apparatus 1 or the power supply adapter unit 500, i.e., that the portable electronic device 100 is connected to the video game apparatus 1 or the power supply adapter unit 500. In step S24, the control means 41 displays data in the inverted display orientation β, which represents a display orientation at the time the external power supply is employed, on the display unit 130, as shown in FIG. 1 or 17.

Thereafter, the control means 41 determines whether there is a manual control input from the manual control pad 120 as a manual control input means in step S25. In this embodiment, a manual control input is entered from the manual control pad 120 when the portable electronic device 100 is connected to the power supply adapter unit 500. If there is a manual control input from the manual control pad 120, then the control means 41 inverts the present display orientation, i.e., inverts the inverted display orientation β into the normal display orientation α, and displays data in the normal display orientation α (see FIG. 17).

If there is no manual control input from the manual control pad 120, e.g., if the manual control pad 120 cannot be pressed as when the portable electronic device 100 is connected to the video game apparatus 1, as shown in FIG. 1, then control goes to steps S21, S22 and continues the inverted display orientation β in step S24.

As described above, when the portable electronic device 100 is disconnected to the video game apparatus 1 after the inverted display orientation β has been continued on the display unit 130, the control means 41 executes the connection detecting processing in step S21 by way of an interrupt, detects the supply of electric energy from the internal battery 49 in step S22, and inverts the inverted display orientation β (see FIG. 1) into the normal display orientation α (see FIG. 5).

In FIG. 1, the manual control pad 120 cannot be pressed while the portable electronic device 100 is being connected to the video game apparatus 1. If the portable electronic device 100 and/or the video game apparatus 1 is structured such that the manual control pad 120 can be pressed while the portable electronic device 100 is being connected to the video game apparatus 1, then the display orientation may be inverted by executing step S21, step S22 (EXTERNAL), step S24, step S25 (YES), and step S23 successively in that order.

In the above embodiment, when the portable electronic device 100 is connected to another device, e.g., the power supply adapter unit 500, the display unit 130 displays data in the inverted display orientation β. When a manual control input is subsequently entered via the manual control pad 120, the inverted display orientation β changes to the normal display orientation α. Therefore, the user can view data displayed on the display unit 130 normally, i.e., displayed data is not upside down.

Further, when the portable electronic device 100 is connected to the video game apparatus 1 as the master device, the display unit 130 displays data in the inverted display orientation β. In this case also, the user can view data displayed on the display unit 130 normally, i.e., displayed data is not upside down. Under the situation, when the portable electronic device 100 is disconnected, the inverted display orientation changes to the normal orientation α instantly. Therefore, when the portable electronic device 100 is used singly, the user can view data displayed on the unit 130 normally, i.e., displayed data is not upside down.

In the above embodiment, the portable electronic device 100 can be used as a portable small-size game machine when disconnected from the video game apparatus 1 after a game program has been downloaded from the video game apparatus 1 to the portable electronic device 100 connected thereto. The portable electronic device 100 may comprise an existing portable telephone set, a PHS (Personal Handy-phone System) terminal, or a PDA (Personal Digital Assistant). In such applications, a power supply adapter for an existing portable telephone set, etc. may be handled as the power supply adapter unit 500.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A portable electronic device (100) having an interface (41c) for connection to an entertainment apparatus (1), comprising:
program storage means (41a) for storing a program;
control means (41) for controlling the execution of the program;
display means (130) for displaying information based on the program which is executed;
manual control input means (120) for controlling said program;
connection detecting means (41) for detecting a connection to said entertainment apparatus (1); and
display control means (41) for setting the orientation of information displayed by said display means (130) to a predetermined orientation (β) when said connection detecting means (41) detects a connection to said entertainment apparatus (1).

2. A portable electronic device according to claim 1, wherein said display control means (41) comprises:
means for setting the orientation of the information displayed by said display means (130) to said predetermined orientation (β) when said connection detecting means (41) detects the connection to said entertainment apparatus (1), and thereafter inverting the information displayed in said predetermined orientation (β) and displaying the inverted information in an inverted orientation (α) when a manual control input is entered via said manual control input means (120).

3. A portable electronic device according to claim 1, wherein said display control means (41) comprises:
means for setting the orientation of the information displayed by said display means (130) to said predetermined orientation (β) when said connection detecting means (41) detects the connection to said entertainment apparatus (1), and thereafter inverting the information displayed in said predetermined orientation (β) and displaying the inverted information in an inverted orientation (α) when said connection detecting means (41) detects a disconnection from said entertainment apparatus (1).

4. A portable electronic device according to claim 1, wherein said connection detecting means (41) comprises means for detecting a connection to said entertainment apparatus (1) based on communications with said entertainment apparatus (1).

5. A portable electronic device according to claim 1, wherein said connection detecting means (41) comprises means for detecting a connection to said entertainment apparatus (1) based the supply of electric energy from said entertainment apparatus (1).

6. A portable electronic device according to claim 1, wherein said entertainment apparatus (1) comprises a video game apparatus (1).

7. A power supply adapter unit (500) for supplying electric energy to a portable electronic device (100), comprising:
power supply means (602) for supplying electric energy to said portable electronic device (100); and
connector means (501a, 501b, 501c) for connecting to said portable electronic device (100);
said portable electronic device (100) comprising program storage means (41a) for storing a program, control means (41) for controlling the execution of the program, display means (130) for displaying information based on the program which is executed, manual control input means (120) for controlling said program, connection detecting means (41) for detecting connection to said power supply adapter unit (500) via connector means (501a, 501b, 501c), and display control means (41) for setting the orientation of information displayed by said display means (130) to a predetermined orientation when said connection detecting means (41) detects a connection to said power supply adapter unit (500), and thereafter inverting the information displayed in said predetermined orientation and displaying the inverted information in an inverted orientation when a manual control input is entered via said manual control input means (120).

8. A recording medium storing a program comprising the steps of:
detecting (S21) a connection to an entertainment apparatus (1);
setting (S22, S24) the orientation of displayed information displayed by a display means (130) to a predetermined orientation (β) when a connection to said entertainment apparatus (1) is detected; and
thereafter, inverting the information displayed in said predetermined orientation (β) and displaying (S22, S23) the inverted information in an inverted orientation (α) when a disconnection from said entertainment apparatus (1) is detected.

9. A recording medium according to claim 8, wherein said entertainment apparatus (1) comprises a video game apparatus (1).

10. A recording medium storing a program comprising the steps of:
detecting (S21) a connection to a power supply adapter unit (500) having power supply means (602);
setting (S22, S23) the orientation of displayed information displayed by a display means (130) to a predetermined orientation (β) when a connection to said power supply adapter unit (500) is detected; and
inverting the information displayed in said predetermined orientation (β) and displaying (S25, S23) the inverted information in an inverted orientation (α) when a manual control input from a manual control input means (120) is detected.
